# EUROPEAN PATENT APPLICATION

(11) **EP 4 557 696 A1**
(43) Date of publication of application: **21.05.2025**
(21) Application number: 23855155.0
(22) Date of filing: 17.08.2023
(51) Int. Cl.: H04L 47/32, H04L 69/324, H04W 28/02, H04W 80/02, H04W 88/08, H04L 69/322

(54) **METHOD AND APPARATUS FOR DISCARDING PDCP SDU IN WIRELESS COMMUNICATION SYSTEM**

(30) Priority: 17.08.2022 KR 20220102832; 03.11.2022 KR 20220145609
(71) Applicant: Samsung Electronics Co., Ltd., Suwon-si, Gyeonggi-do 16677 (KR)
(72) Inventor: LEE, Taeseop, Suwon-si, Gyeonggi-do 16677 (KR); KANG, Hyunjeong, Suwon-si, Gyeonggi-do 16677 (KR); AGIWAL, Anil, Suwon-si, Gyeonggi-do 16677 (KR)
(74) Representative: Nederlandsch Octrooibureau
(86) International application number: PCT/KR2023/012142
(87) International publication number: WO 2024/039189

(57) **Abstract**

The disclosure relates to a 5G or 6G communication system for supporting a higher data transmission rate. The present disclosure relates to an operating method of a terminal in a wireless communication system, comprising the steps of: receiving a terminal capability request message from a base station; in response to the terminal capability request message, transmitting, to the base station, terminal capability information including information related to discarding of a PDU set; and when the terminal supports the discarding of the PDU set, receiving configuration information regarding the PDU set from the base station.

## Description

### Technical Field

The disclosure relates to operations of a UE in a wireless communication system. More specifically, the disclosure relates to a method and an apparatus for efficiently servicing application data traffic in a wireless communication system.

### Background Art

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

of wireless communication systems as described above, various services can be provided, and accordingly there is a need for ways to effectively provide these services.

### Disclosure of Invention

### Technical Problem

Embodiments set forth herein are to provide a device and a method capable of effectively providing services in a wireless communication system.

### Solution to Problem

According to an embodiment of the disclosure, a method performed by a terminal in a wireless communication system may include: receiving a terminal capability enquiry message from a base station; transmitting terminal capability information including information related to discarding of a protocol data unit (PDU) set to the base station, in response to the terminal capability enquiry message; and receiving configuration information regarding discarding of the PDU set from the base station in case that the terminal supports discarding of the PDU set.

### Advantageous Effects of Invention

The disclosure provides a device and a method capable of effectively providing services in a wireless communication system.

### Brief Description of Drawings

FIG. 1A illustrates the structure of an NR system according to an embodiment of the disclosure.
FIG. 1B illustrates a radio protocol structure in LTE and NR systems according to an embodiment of the disclosure.
FIG. 1C illustrates the configuration of a protocol data unit (PDU) set with regard to each application data unit (ADU) according to an embodiment of the disclosure.
FIG. 1D illustrates a PDU set discarding operation and a configuration method on a packet data convergence protocol (PDCP) layer according to an embodiment of the disclosure.
FIG. 1E illustrates a PDU set discarding operation and a configuration method in case that respective PDUs constituting a PDU set have different levels of importance according to an embodiment of the disclosure.
FIG. 1F illustrates a PDU set discarding operation and a configuration method in case that there is dependency between PDU sets according to an embodiment of the disclosure.
FIG. 1G illustrates a signaling procedure between a UE and a base station for configuring a PDU set discarding operation on the UE's PDCP layer according to an embodiment of the disclosure.
FIG. 2 illustrates a UE device according to an embodiment of the disclosure.
FIG. 3 illustrates a base station device according to an embodiment of the disclosure.

### Mode for the Invention

Hereinafter, embodiments of the disclosure will be described in detail with reference to the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In describing the disclosure below, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, upper signaling refers to a signal transfer scheme from a base station to a terminal via a downlink data channel of a physical layer, or from a terminal to a base station via an uplink data channel of a physical layer. The upper signaling may also be understood as radio resource control (RRC) signaling or a media access control (MAC) control element (CE).

In the following description of the disclosure, terms and names defined in the 3rd generation partnership project new radio (3GPP NR) or 3GPP long term evolution (3GPP LTE) standards will be used for the sake of descriptive convenience. However, the disclosure is not limited by these terms and names, and may be applied in the same way to systems that conform other standards. In the disclosure, the term "gNB" may be interchangeably used with the term "eNB" for the sake of descriptive convenience. That is, a base station described as "eNB" may refer to "gNB". Furthermore, the term "terminal" may refer to not only a mobile phone, an MTC device, an NB-IoT device, and a sensor, but also other wireless communication devices.

In the following description, a base station is an entity that allocates resources to terminals, and may be at least one of a gNode B (gNB), an eNode B (eNB), a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, examples of the base station and the terminal are not limited to those mentioned above.

The disclosure relates to a method and an apparatus for packet data convergence protocol service data unit discarding (hereinafter, referred to as PDCP SDU discarding) in a next-generation wireless communication system. More specifically, the disclosure relates to a method and an apparatus wherein, when a set of protocol data units (PDUs) (hereinafter, referred to as a PDU set) corresponding to an application data unit (hereinafter, referred to as an ADU) is configured in a 3GPP 5GS, a PDCP SDU discarding operation is performed with regard to each PDU set in order to efficiently use network radio resources.

The disclosure presents various protocol data unit (PDU) set configurations which may be used to guarantee ADU-unit quality of service (QoS), and describes a method for performing a PDU set discarding operation adaptively to various PDU set configurations. In order to describe the method for performing a PDU set discarding operation, a method for indicating a PDU set discarding operation with regard to each PDU set on a PDCP layer, and a method for indicating a PDU set discarding operation with regard to each PDU, will be described in detail. In addition, a PDU set discarding operation is defined in consideration of dependency between PDU sets.

Through the disclosure, a UE and a base station may exchange control information for a PDU set discarding operation. The UE may report, to the base station (for example, gNB), whether a PDU set discarding operation is supported, through UE capability information. The base station (for example, gNB) may instruct the UE to perform a PDU set discarding operation with reference to the UE capability information reported by the UE, and the UE may perform a PDU set discarding operation according to the base station's instruction.

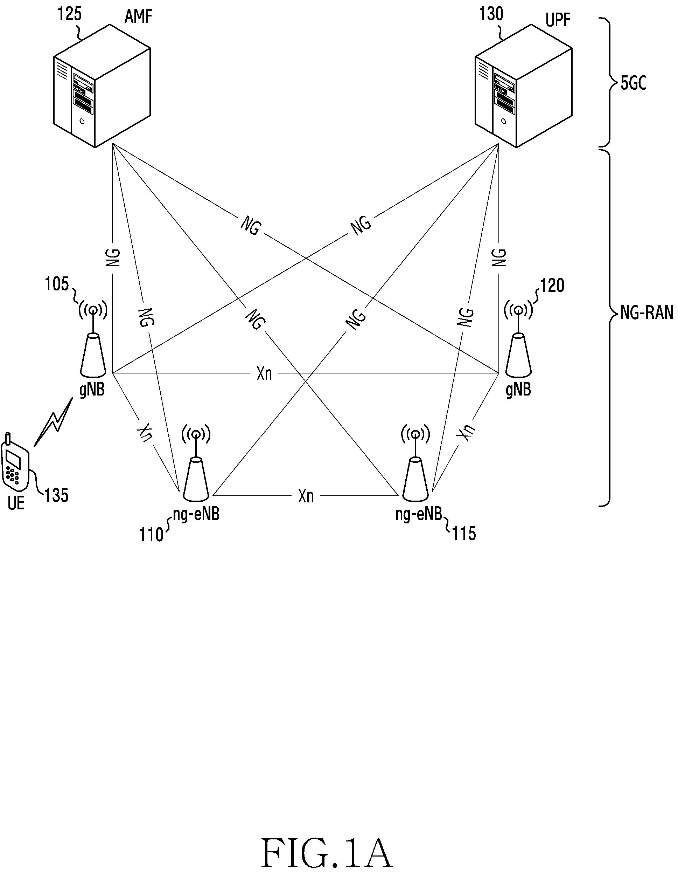

FIG. 1A illustrates the structure of an NR system according to an embodiment of the disclosure.

Referring to FIG. 1A, the wireless communication system may be configured by multiple base stations (for example, a gNB 105, an ng-eNB 110, an ng-eNB 115, and a gNB 120), an access and mobility management function (AMF) 125, and a user plane function (UPF) 130. The user equipment (hereinafter, referred to as a UE or a terminal) 135 may access an external network through the base stations (for example, the gNB 105, the ng-eNB 110, the ng-eNB 115, and the gNB 120) and the UPF 130.

In FIG. 1A, the base stations (for example, the gNB 105, the ng-eNB 110, the ng-eNB 115, and the gNB 120) may provide a radio access to UEs that access the network as cellular network access nodes. That is, the base stations (for example, the gNB 105, the ng-eNB 110, the ng-eNB 115, and the gNB 120) may aggregate state information such as the UEs' buffer state, available transmission power state, in order to service users' traffic, and channel state and may schedule the same, thereby supporting connection between the UEs and the core network (CN). Meanwhile, a control plane (CP) for managing connection with a user plane (UP) related to transmission of actual user data during communication may be divided and configured. In the drawing, the gNB 105 and the gNB 120 may use UP and CP technologies defined in NR technologies, and the ng-eNB 110 and the ng-eNB 115 may use UP and CP technologies defined in LTE technologies, although connected to a 5GC. The 5GC may refer to a CN in an NR system.

The AMF 125 may refer to a device configure to handle various control functions in addition to the UE-related mobility management function, and may be connected to multiple base station. The UPF 130 may refer to a kind of gateway device configured to provide data transmission. Although not illustrate in FIG. 1A, the NR communication system may include a session management function (SMF). The SMF may manage a packet data network connection such as a protocol data unit (PDU) session provided to the UE.

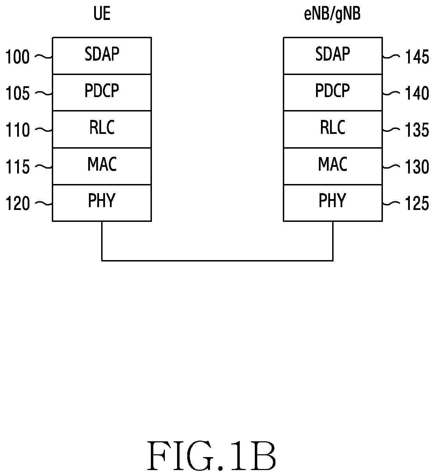

FIG. 1B illustrates a radio protocol structure in LTE and NR systems according to an embodiment of the disclosure.

Referring to FIG. 1B, the NR system's radio protocol may include service data adaptation protocols (SDAPs) 100 and 145, packet data convergence protocols (PDCPs) 105 and 140, radio link controls (RLCs) 110 and 135, and medium access controls (MACs) 115 and 130 on the UE side and on the gNB side, respectively. The SDAPs 100 and 145 may perform an operation for mapping each QoS flow to a specific data radio bearer (DRB), and the SDAP configuration corresponding to each DRB may be given from the upper layer (for example, RRC layer). The PDCPs 105 and 104 may handle operations such as IP header compression and/or restoration, and the RLCs 110 and 135 may reconfigure a PDCP PDU to an appropriate size. The MACs 115 and 130 may be connected to multiple RLC layer devices configured for one UE, and may perform operations of multiplexing RLC PDUs to a MAC PDU and demultiplexing the RLC PDUs from the MAC PDU. The physical (PHY) layers 120 and 125 may perform operations of channel-coding and modulating upper layer data, producing an orthogonal frequency-division multiplexing (OFDM) symbol therefrom and transmitting the same through a radio channel, or demodulating an OFDM symbol received through the radio channel, channel-decoding the same, and delivering the same to the upper layer. In addition, the PHY layers 120 and 125 may use a hybrid automatic repeat request (HARQ) for additional error correction, and the receiving end may transmit one bit to the transmitting end to indicate whether a packet transmitted thereby has been received. Information regarding whether the receiving end has received a packet from the transmitting end may be referred to as HARQ ACK/NACK information. In the case of an LTE system, downlink HARQ ACK/NACK information regarding uplink data transmission may be transmitted through a physical HARQ indicator channel (PHICH). In the case of an NR system, downlink HARQ ACK/NACK information regarding uplink data transmission may be transmitted through a physical dedicated control channel (PDCCH), which is used to transmit a downlink and/or uplink resource allocation or the like, and the base station may determine, based on the UE's scheduling information, whether retransmission is necessary or new transmission is to be performed. The reason the base station in an NR system determines, based on the UE's scheduling information, whether retransmission is necessary or new transmission is to be performed, unlike LTE, is because an asynchronous HARQ is applied in the NR. Uplink HARQ ACK/NACK information regarding downlink data transmission may be transmitted through a physical uplink control channel (PUCCH) or through a physical uplink shared channel (PUSCH). The PUCCH may be generally transmitted in the uplink of the primary cell (PCell) (described later). However, in case that the UE supports the same, HARQ ACK/NACK information regarding the secondary cell (SCell) (described later) may be transmitted, and the SCell may be referred to as a PUCCH SCell.

Although not illustrated in the drawing, a radio resource control (RRC) layer may exist on each upper layer of the PDCP layer of the UE and the base station, and the RRC layer may exchange access/measurement-related configuration control messages for radio resource control.

Meanwhile, the PHY layer may be configured by one or multiple frequencies and/or carriers, and the technology in which multiple frequencies are simultaneously configured and used may be referred to as carrier aggregation (CA). According to the CA technology, instead of using only one carrier for communication between a UE and a base station (for example, eNB or gNB), a main carrier and one or multiple subcarriers may be additionally used to increase the amount of transmission as much as the number of subcarriers. Meanwhile, a cell in a base station using main carriers in LTE and NR systems may be referred to as a primary cell or PCell, and a cell in a base station using subcarriers may be referred to as a secondary cell or SCell.

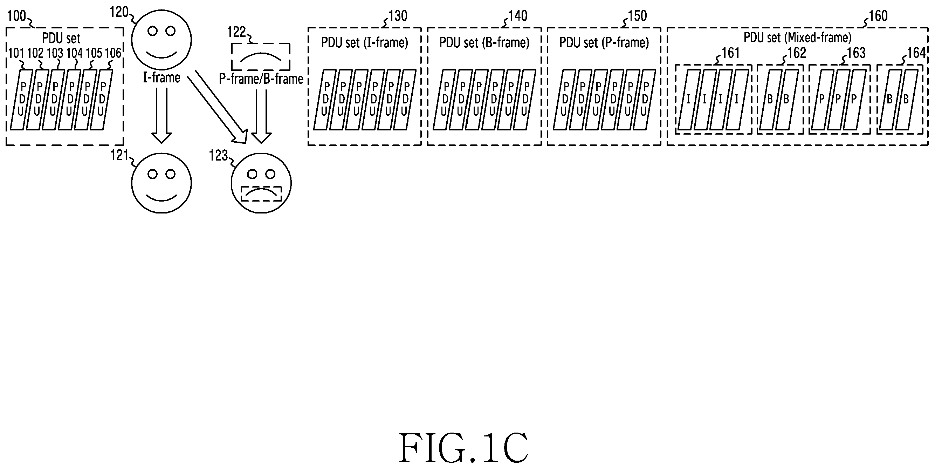

FIG. 1C illustrates the configuration of a PDU set with regard to each application data unit (ADU) according to an embodiment of the disclosure.

Referring to FIG. 1C, various kinds of traffic may be distinguished by an ADU which is a unit of information distinguishable at the application level. In an embodiment, the ADU may be one photograph or picture, one frame of video, or one unit of audio. The ADU may be distinguished with regard to each PDU set 110, and a PDU set 110 may be divided into one or more PDUs 101, 102, 103, 104, 105, and 106 and then transmitted according to the size.

For example, in case that moving picture experts group (MPEG) standard video compression technology is used for video traffic, a PDU set may be configured by one of 1) a combination 130 of multiple PDUs corresponding to one intra (I)-frame, 2) a combination 140 of multiple PDUs corresponding to one bidirectional (B)-frame, 3) a combination 150 of multiple PDUs corresponding to one predicted (P)-frame, and 4) a combination 160 of multiple PDUs corresponding to an ADU configured by multiple I-frames 161, B-frames 162 and 164, and/or P-frames 163. The I-frame 120 is an independent frame and may represent one complete photograph or picture 121 regardless of whether other frames exist. The P-frame and B-frame 122 represent information regarding changes of the previous I-frame 120. If the I-frame 120 has failed to be received normally, the photograph or picture 123 supposed to be expressed by the P-frame and B-frame 122 may not be expressed normally. In addition, the B-frame is interposed between the I-frame and P-frame and thus stores the movement between the two frames as predicted data with reference to both frames. Therefore, the photograph or picture supposed to be expressed by the B-frame can be expressed normally only if both the I-frame (which precedes the same) and the P-frame (which follows the same) are received normally.

In an embodiment of the disclosure, PDU set configuration and PDU set discarding (or ADU discarding) operations may be described with reference to an exemplary case in which MPEG standard video compression technology is used for video traffic, for convenience of description. However, the content of the disclosure is not limited to the PDU set configuration in connection with video traffic, and may be applied to all normal ADU-based PDU set configurations.

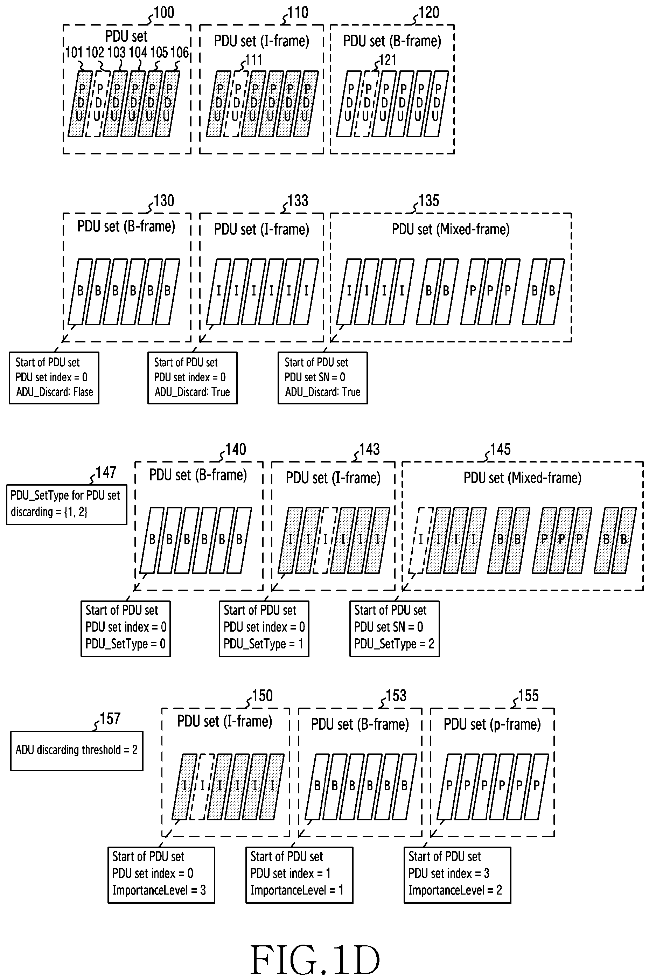

FIG. 1D illustrates a PDU set discarding operation and a configuration method on a PDCP layer according to an embodiment of the disclosure.

In case that a discardTimer is configured for a PDCP entity of a specific DRB used to transmit traffic which is sensitive to delay time, and in case that the PDCP entity for which the discardTimer is configured has received a PDCP SDU from the upper layer, the same may start a discarTimer associated with the PDCP SDU. In case that the discardTimer expires before the PDCP SDU is successfully transmitted, the PDCP entity may give up transmission and discard the PDCP SDU. In addition, in case that the PDCP SDU has already been delivered to the lower layer for transmission, the PDCP entity may instruct the lower layer to discard the PDCP PDU corresponding to the PDCP SDU. The PDU set discarding operation on the PDCP layer described above may be configured in case that, when traffic sensitive to delay time is transmitted, delayed transmission of the PDCP SDU makes no difference to the receiving end from the timepoint at which the discardTimer configured at a specific time value expires.

Referring to FIG. 1D, in case that a specific PDU 102 among PDUs that constitute a PDU set 100 has been discarded due to discardTimer expiration, the PDCP layer may perform a PDU set discarding operation in which the remaining PDUs 101,103,104,105, and 106 that constitute the PDU set are discarded in order to efficiently use radio resources. The remaining PDUs may refer to "PDUs that have not yet been transmitted" among the PDUs that constitute the PDU set, or may refer to "PDUs having a higher sequence number (SN) than discarded PDUs". In addition, a "PDU set" and a "PDU", as used herein, may refer to a PDU on the PDCP upper layer, and may refer to a PDCP SDU on the PDCP layer. Such a PDU set discarding operation (or ADU discarding) may enable efficient use of radio resources because, in case that even one of PDUs that constitute a PDU set is discarded, thereby making PDU set transmission meaningless, other PDUs belong to the PDU set are also discarded.

The PDU set discarding operation may be configured with regard to each DRB. In order to configure the PDU set discarding operation, a one-bit indicator such as "PDU_SetDiscardEnabled", "PDU_SetDiscard", "ADU_DiscardEnabled", "ADU_Discard", or the like may be newly defined in the PDCP-Config of the DRB, and the base station may configure a PDU set discarding operation regarding a specific DRB through the indicator newly defined in the PDCP-Config of the DRB. In addition, the base station may deliver a list of IDs of DRBs regarding which a PDU set discarding operation is to be performed to the UE, and the UE may perform a PDU set discarding operation in a PDCP entity corresponding to DRBs. In addition, instead of configuring a PDU set discarding operation with regard to each DRB, the base station may configure a PDU set discarding operation with regard to each UE. When configuring a PDU set discarding operation with regard to each UE, the base station may deliver a one-bit indicator such as "PDU_SetDiscardEnabled", "PDU_SetDiscard", "ADU_DiscardEnabled", "ADU_Discard", or the like to a specific UE in order to configure the PDU set discarding operation. Upon receiving the one-bit indicator, the UE may perform a PDU set discarding operation with regard to DRBs, which has a discardTimer configured therefor, and which has received PDU set-related configuration information (for example, PDU set index information) from the upper layer, among all DRBs configured in the UE.

As in the embodiment described above, the PDU set discarding operation may be configured with regard to each DRB, and in case that the PDU set discarding operation is configured with regard to each DRB, the PDU set discarding operation may be performed with regard to all PDU sets transmitted through DRBs. However, in case that various kinds of PDU sets (for example, PDU sets corresponding to an I-frame, a B-frame, and a P-frame, respectively) are transmitted together through the same DRB, whether the PDU set discarding operation is necessary may vary depending on the PDU set type. For example, in case that a specific PDU 111 of a PDU set 110 configured by PDUs that constitute an I-frame is discarded due to discardTimer expiration, it may be difficult to restore the I-frame even if all other PDUs belonging to the PDU set are received. Therefore, in case that it is difficult to restore the I-frame, the PDCP entity may perform a PDU set discarding operation with regard to the PDU set corresponding to the I-frame, in order to prevent meaningless use of radio resources. On the other hand, in the case of a PDU set 120 constituting a B-frame, it may be possible to restore the B-frame even if a specific PDU 121 in the PDU set is discarded due to discardTimer expiration. However, the quality of the restored B-frame may deteriorate in proportion to the number of discarded PDUs among PDUs that constitute the PDU set, and the PDCP entity may thus perform no PDU set discarding operation with regard to the PDU set corresponding to the B-frame. The manner in which the discardTimer is operated on the PDCP layer may vary depending on whether the PDU set discarding operation is necessary or not. In case that PDUs (for example, PDCP SDUs) constituting a type of PDU set which requires a PDU set discarding operation to be performed have arrived at the PDCP layer, the PDCP entity may operate the discardTimer with regard to each PDU set in order to perform a discarding operation with regard to each PDU set. Specifically, at a timepoint at which the first PDU constituting a specific PDU set has arrived at the PDCP layer, the PDCP entity may start the discardTimer corresponding to the PDU set. Thereafter, if the discardTimer corresponding to the PDU set expires, the PDCP entity may discard all PDUs (for example, PDCP SDUs) that constitute the PDU set. On the other hand, in case that PDUs (for example, PDCP SDUs) constituting a type of PDU set which requires no PDU set discarding operation to be performed have arrived at the PDCP layer, the PDCP entity may operate the discardTimer with regard to each PDU (for example, PDCP SDU) regardless of the PDU set. Specifically, at a timepoint at which each PDU (for example, PDCP SDU) has arrived at the PDCP layer, the PDCP layer may start the discardTimer corresponding to the PDU. Thereafter, if the discardTimer corresponding to each PDU set expires, the PDCP layer may discard the corresponding PDU. Additionally, a scheme may be considered wherein the PDCP entity also operates the discardTimer with regard to each PDU in case that PDUs (for example, PDCP SDUs) constituting a type of PDU set which requires a PDU set discarding operation to be performed have arrived at the PDCP layer. In the case of the scheme wherein the PDCP entity operates the discardTimer with regard to each PDU, the PDCP layer may start, at a timepoint at which each PDU (for example, PDCP SDU) constituting a specific PDU set has arrived at the PDCP layer, the discardTimer corresponding to the PDU. Thereafter, if the discardTimer corresponding to a specific PDU (for example, PDCP SDU) constituting a specific PDU set expires, the PDCP entity may discard all PDUs (for example, PDCP SDUs) that constitute the PDU set. However, in case that the discardTimer is also operated with regard to each PDU in connection with PDUs constituting a type of PDU set which requires a PDU set discarding operation to be performed, actual PDCP discarding may be performed with regard to each PDU set. This may result in inefficiency because each timer needs to be operated unnecessarily with regard to each PDU.

As in the embodiment described above, whether the PDCP discarding operation is to be performed may vary according to the type of the PDU set (for example, according to which the PDU set corresponds to, among an I-frame, a B-frame, or a P-frame). Whether a PDU set discarding operation is to be performed with regard to a PDU set may be indicated to the PDCP layer, with regard to each PDU set, in the following methods:

Method 1: a one-bit indicator (for example, "PDU_SetDiscard", "ADU_discard, or the like) may be given to indicate whether PDU set discarding is necessary with regard to each PDU set. If the ADU_discard indicator value is given as "true" or "enabled" with regard to a specific PDU set (133 or 135), the PDCP entity may perform a PDU set discarding operation with regard to the PDU set. On the other hand, if the ADU_discard indicator value is given as "false" or "disabled" with regard to a specific PDU set (130), the PDCP entity may not perform a PDU set discarding operation with regard to the PDU set.

In order to indicate whether a PDU set discarding operation is necessary with regard to each PDU set to the PDCP entity, the SDAP header may include an indicator that indicates whether a PDU set discarding operation is necessary together with PDU set index information. The indicator may be included in the SDAP header of all PDUs that constitute a PDU set, or may be included in the SDAP header of the first PDU that constitutes a PDU set. In case that the PDU set discarding indicator is included only in the SDAP header of the first PDU that constitutes a PDU set, the packet processing load on the SDAP/PDCP layer may be reduced. However, in case that a problem occurs when processing the first PDU of the PDU set, a problem may also occur to the configuration regarding the PDU set discarding operation. The SDAP layer may receive information regarding whether a PDU set discarding operation is necessary with regard to each PDU set, together with information regarding the PDU set configuration, from the upper layer (for example, application layer, IP layer, or non-access-stratum layer).

Method 2: an indicator (for example, PDU_SetType or the like) may be given to indicate the type of each PDU set. In addition, the PDU set type 147 which requires a PDU set discarding operation to be performed 1) may be given from the non-access-stratum (NAS) layer, 2) may be pre-configured for the UE end, or 3) may be given (or configured) by RRC signaling. In case that the PDU_SetType value given with regard to a specific PDU set corresponds to a PDU set type which requires a PDU set discarding operation to be performed (143 or 145), the PDCP entity may perform a PDU set discarding operation with regard to the PDU set. On the other hand, in case that the PDU_SetType value given with regard to a specific PDU set does not correspond to a PDU set type which requires a PDU set discarding operation to be performed (140), the PDCP entity may not perform a PDU set discarding operation with regard to the PDU set.

In order to indicate the type of each PDU set (for example, PDU_SetType) to the PDCP entity, the SDAP header may include an indicator that indicates the PDU set type (PDU_SetType) together with PDU set index information. The indicator may be included in the SDAP header of all PDUs that constitute a PDU set, or may be included in the SDAP header of the first PDU that constitutes a PDU set. In case that the PDU set type indicator is included only in the SDAP header of the first PDU that constitutes a PDU set, the packet processing load on the SDAP/PDCP layer may be reduced. However, in case that a problem occurs when processing the first PDU of the PDU set, a problem may also occur to the configuration regarding the PDU set discarding operation.

The SDAP layer may receive information regarding the PDU set type, together with information regarding the PDU set configuration, from the upper layer (for example, application layer, IP layer, or non-access-stratum layer).

Method 3: an indicator (for example, ImportanceLevel or the like) may be given to indicate the level of importance of each PDU set. In addition, threshold value of the level of importance at which a PDU set discarding operation is to be performed (for example, ADU discarding threshold) 157 1) may be given from the non-access-stratum (NAS) layer, 2) may be pre-configured for the UE end, or 3) may be given (or configured) by RRC signaling. In case that the value of the level of importance (ImportanceLevel) given with regard to a specific PDU set is larger than the threshold value of the level of importance at which a PDU set discarding operation is to be performed (150), the PDCP entity may perform a PDU set discarding operation with regard to the PDU set. On the other hand, in case that the value of the level of importance (ImportanceLevel) given with regard to a specific PDU set is smaller than or equal to the threshold value of the level of importance at which a PDU set discarding operation is to be performed (153 or 155), the PDCP entity may not perform a PDU set discarding operation with regard to the PDU set.

In order to indicate the level of importance of each PDU set to the PDCP entity, the SDAP header may include an indicator (ImportanceLevel) that indicates the level of importance of the PDU set together with PDU set index information. The indicator may be included in the SDAP header of all PDUs that constitute a PDU set, or may be included in the SDAP header of the first PDU that constitutes a PDU set. In case that the PDU set importance level indicator is included only in the SDAP header of the first PDU that constitutes a PDU set, the packet processing load on the SDAP/PDCP layer may be reduced. However, in case that a problem occurs when processing the first PDU of the PDU set, a problem may also occur to the configuration regarding the PDU set discarding operation.

The SDAP layer may receive information regarding the level of importance of a PDU set, together with information regarding the PDU set configuration, from the upper layer (for example, application layer, IP layer, or non-access-stratum layer).

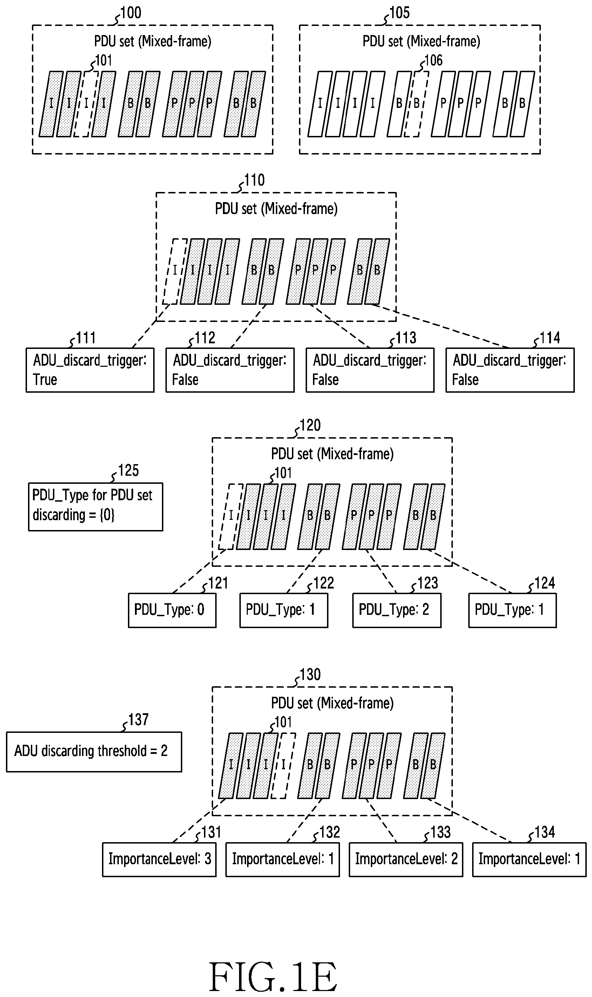

FIG. 1E illustrates a PDU set discarding operation and a configuration method in case that respective PDUs constituting a PDU set have different levels of importance according to an embodiment of the disclosure.

Referring to FIG. 1E, PDUs constituting the same PDU set may have different levels of importance. In addition, in case that PDUs have been discarded according to the level of importance of each PDU, whether other PDUs belonging to the same PDU set are also to be discarded (for example, whether a PDU set discarding operation needs to be performed) may vary. For example, in the case of a PDU set 100 or 105 corresponding to an ADU configured by multiple I-frames, B-frames, and P-frames, the level of importance may differ depending on what kind of frame is configured by each PDU that constitutes the PDU set, and whether the PDU set discarding operation needs to be performed together, when PDUs are discarded, may differ. In case that a PDU 101 that constitutes an I-frame is discarded due to discardTimer expiration as in 100, it may be impossible to restore the I-frame and a B-frame and a P-frame that reference the I-frame. Therefore, in case that it is impossible to restore an I-frame and a B-frame and a P-frame that reference the I-frame, discarding of a PDU 101 corresponding to the I-frame may cause a PDU set discarding operation regarding the PDU set 100. On the other hand, in case that a PDU 106 that constitutes a B-frame is discarded due to discardTimer expiration as in 105, the quality of the restored B-frame may be degraded, but it may be possible to restore an I-frame and a P-frame included together in the same PDU set. Therefore, in case that a PDU 106 that constitutes a B-frame is discarded due to discardTimer expiration, discarding of the PDU 106 corresponding to the B-frame may not easily cause a PDU set discarding operation regarding the PDU set 105.

In case that each PDU belonging to the same PDU set has a different level of importance as in the above-described embodiment, it may be necessary to indicate, to the PDCP layer, whether discarding of each PDU due to discardTimer expiration may cause a PDU set discarding operation of the PDU set to which the PDU belongs. The following methods may exist to indicate, to the PDCP layer, whether discarding of each PDU due to discardTimer expiration may cause a PDU set discarding operation of the PDU set to which the PDU belongs.

Method 1: a one-bit indicator (for example, "PDU_SetDiscard_trigger", "ADU_discard_trigger", or the like) may be given to indicate whether a PDU set discarding operation may be generated with regard to each PDU. If the ADU_discard_trigger indicator value is given as "true" or "enabled" with regard to a specific PDU (111), the PDCP entity may perform a PDU set discarding operation when discarding the PDU due to expiration of the discardTimer value. On the other hand, if the ADU_discard_trigger indicator value is given as "false" or "disabled" with regard to a specific PDU (112, 113, or 114), the PDCP entity may have difficulty in performing a PDU set discarding operation when discarding the PDU due to expiration of the discardTimer value.

In order to indicate, to the PDCP entity, whether a PDU set discarding operation may be generated with regard to each PDU, the SDAP header may include an indicator that indicates whether a PDU set discarding operation needs to occur. The indicator may be included in the SDAP header of all PDUs that constitute a PDU set. The SDAP layer may receive information regarding whether a PDU set discarding operation needs to occur with regard to each PDU, together with information regarding the PDU set configuration, from the upper layer (for example, application layer, IP layer, or non-access-stratum layer).

Method 2: an indicator (for example, PDU_Type or the like) may be given to indicate the type of each PDU. In addition, the PDU type 125 (list of PDU_Type values) which may cause a PDU set discarding operation 1) may be given from the non-access-stratum (NAS) layer, 2) may be pre-configured for the UE end, or 3) may be given (or configured) by RRC signaling. In case that the PDU_Type value given with regard to a specific PDU corresponds to a PDU type which causes a PDU set discarding operation (121), the PDCP entity may perform a PDU set discarding operation while discarding the PDU when the discardTimer of the PDU expires. On the other hand, in case that the PDU_Type value given with regard to a specific PDU does not correspond to a PDU type which causes a PDU set discarding operation (122, 123, or 124), the PDCP entity may have difficulty in performing a PDU set discarding operation while discarding the PDU when the discardTimer of the PDU expires.

In order to indicate the type of each PDU (for example, PDU_Type) to the PDCP entity, the SDAP header may include an indicator that indicates the PDU type (PDU_Type). The indicator may be included in the SDAP header of all PDUs that constitute a PDU set.

The SDAP layer may receive information regarding the PDU type, together with information regarding the PDU set configuration, from the upper layer (for example, application layer, IP layer, or non-access-stratum layer).

Method 3: an indicator (for example, ImportanceLevel or the like) may be given to indicate the level of importance of each PDU. In addition, threshold value 137 (ADU discarding threshold) of the level of importance at which a PDU set discarding operation may occur 1) may be given from the non-access-stratum (NAS) layer, 2) may be pre-configured for the UE end, or 3) may be given (or configured) by RRC signaling. In case that the value of the level of importance (ImportanceLevel) given with regard to a specific PDU is larger than the threshold value of the level of importance at which a PDU set discarding operation is to occur (131), the PDCP entity may perform a PDU set discarding operation while discarding the PDU when the discardTimer of the PDU expires. On the other hand, in case that the value of the level of importance (ImportanceLevel) given with regard to a specific PDU is smaller than or equal to the threshold value of the level of importance at which a PDU set discarding operation is to occur (132, 133, or 134), the PDCP entity may have difficulty in performing a PDU set discarding operation while discarding the PDU when the discardTimer of the PDU expires.

Alternatively, in case that the discardTimer of a specific PDU has expired, the PDCP entity may discard the PDU 131 and may simultaneously perform a PDU set discarding operation only with regard to PDUs 132, 133, and 134, the importance level value of which is equal to or smaller than that of the PDU. On other hand, PDUs having a higher importance level value than the PDU, the discardTimer of which has expired, may be exempted from the PDU set discarding operation and may thus not be discarded.

In order to indicate the level of importance of each PDU to the PDCP entity, the SDAP header may include an indicator (ImportanceLevel) that indicates the level of importance of the PDU. The indicator may be included in the SDAP header of all PDUs that constitute a PDU set. The SDAP layer may receive information regarding the importance level value of a PDU, together with information regarding the PDU set configuration, from the upper layer (for example, application layer, IP layer, or non-access-stratum layer).

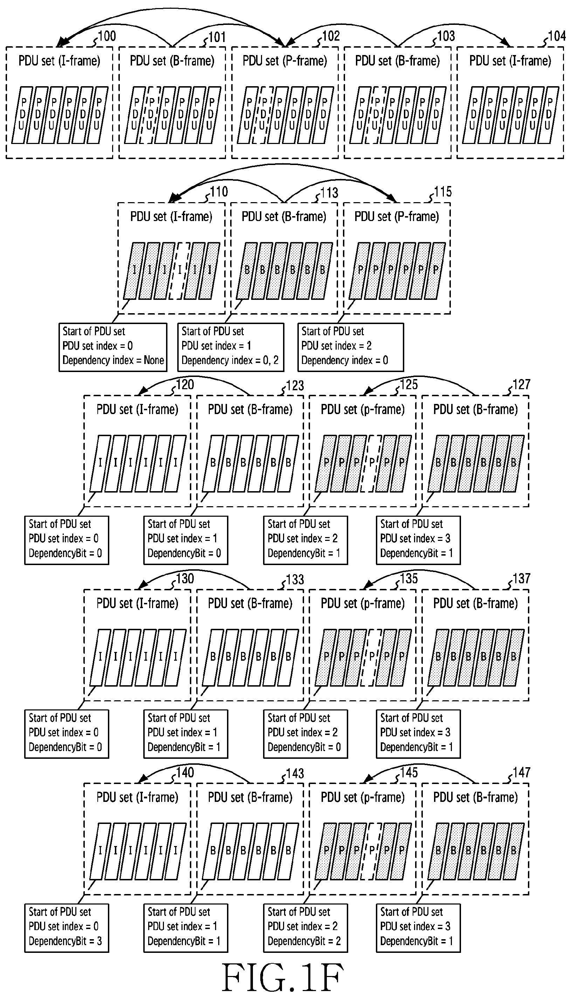

FIG. 1F illustrates a PDU set discarding operation and a configuration method in case that there is dependency between PDU sets according to an embodiment of the disclosure.

Referring to FIG. 1F, in case that there is dependency between PDU sets, a PDU set discarding operation regarding a specific PDU set may cause a PDU set discarding operation regarding another PDU set that is dependent on the PDU set. In an embodiment, in the case of video traffic, PDU sets 101 and 102 which constitute a B-frame and/or a P frame transmitted after a PDU set 100 that constitutes an I-frame may be dependent on the PDU set 100 that constitutes an I-frame. In other words, if a PDU set discarding operation occurs with regard to the PDU set 100 that constitutes an I-frame, thereby making it impossible to restore the I-frame, it may also become impossible to restore the B-frame and P-frame transmitted thereafter. Therefore, the PDU set discarding operation regarding the PDU set 100 that constitutes an I-frame may cause a PDU set discarding operation regarding the PDU sets 101 and 102 which constitute a B-frame and/or a P frame transmitted thereafter. That is, in case that it is difficult to restore the I-frame, and even if the PDU sets that constitute the B-frame and P-frame transmitted thereafter are received, it is difficult to restore the frames, and the PDCP layer may thus discard the PDU sets. In an embodiment, the PDU set 103 that constitutes a B-frame may be dependent on the PDU set 104 that constitutes an I-frame transmitted thereafter. Thereafter, a PDU set discarding operation regarding the PDU set 104 that constitutes an I-frame may cause a PDU set discarding operation regarding the PDU set 103 that constitutes a B-frame.

In case that a PDU set discarding operation regarding a specific PDU set has occurred as in the above-described embodiment, dependency between PDU sets may be indicated to the PDCP layer such that a PDU set discarding operation is performed with regard to a PDU set dependent on the PDU set. The dependency between PDU sets may be indicated in the following methods:

Method 1: an indicator (for example, DependencyIndex) including one index or multiple indices of a PDU set, on which another PDU set depends, may be given with regard to each PDU set. In case that a PDU set discarding operation has occurred with regard to a specific PDU set 110, a PDU set discarding operation may be performed with regard to other PDU sets 113 and 115, the index value (0) of which is included in DependencyIndex.

In order to indicate dependency between PDU sets to the PDCP entity, the SDAP header may include an index indicator (for example, DependencyIndex) regarding another PDU set on which each PDU set depends, together with PDU set index information. The indicator may be included in the SDAP header of all PDUs that constitute a PDU set, or may be included in the SDAP header of the first PDU that constitutes a PDU set. In case that the indicator is included only in the SDAP header of the first PDU that constitutes a PDU set, the packet processing load on the SDAP/PDCP layer may be reduced. However, in case that a problem occurs when processing the first PDU of the PDU set, a problem may also occur to the configuration regarding the PDU set discarding operation. The SDAP layer may receive information regarding the dependency between PDU sets, together with information regarding the PDU set configuration, from the upper layer (for example, application layer, IP layer, or non-access-stratum layer).

Method 2: a one-bit indicator (for example, DependencyBit or the like) may be given to indicate whether a PDU set (PDU set index = n) is dependent on the preceding PDU set (PDU set index = n-1), with regard to each PDU set. The indicator may indicate whether a specific PDU set is dependent on the preceding PDU set in two types.

1) Toggling type: it may be indicated that, if the dependency bit value of a specific PDU set 123 or 127 is equal to the dependency bit value of the preceding PDU set 120 or 125, the PDU set 123 or 127 is dependent on the preceding PDU set 120 or 125. Therefore, a PDU set discarding operation regarding the preceding PDU set 125 may cause a PDU set discarding operation regarding the PDU set 127.

On the other hand, it may be indicated that, if the dependency bit value of a specific PDU set 125 becomes different from the dependency bit value of the preceding PDU set 123, the PDU set 125 is not dependent on the preceding PDU set 123. A PDU set discarding operation regarding the preceding PDU set 123 may have difficulty in causing a PDU set discarding operation regarding the PDU set 125.

2) True/false type: it may be indicated that, if the dependency bit value of a specific PDU set 133 or 137 is "true" or "1", the PDU set 133 or 137 is dependent on the preceding PDU set 130 or 135. Therefore, a PDU set discarding operation regarding the preceding PDU set 135 may cause a PDU set discarding operation regarding the PDU set 137.

On the other hand, it may be indicated that, if the dependency bit value of a specific PDU set 135 is "false" or "0", the PDU set 135 is not dependent on the preceding PDU set 133. Therefore, a PDU set discarding operation regarding the preceding PDU set 135 may have difficulty in causing a PDU set discarding operation regarding the PDU set 137.

Therefore, in case that a PDU set discarding operation has occurred with regard to the PDU set 125 or 135, the DependencyBit indicator value of the following PDU set 127 or 137 may determine whether a PDU set discarding operation may occur with regard to the PDU set 127 or 137.

In order to indicate the dependency of a specific PDU set on the preceding PDU set to the PDCP entity, the SDAP header may include an indicator (DependencyBit) indicating whether a specific PDU set depends on the preceding PDU set, together with PDU set index information. The indicator may be included in the SDAP header of all PDUs that constitute a PDU set, or may be included in the SDAP header of the first PDU that constitutes a PDU set. In case that the indicator is included only in the SDAP header of the first PDU that constitutes a PDU set, the packet processing load on the SDAP/PDCP layer may be reduced. However, in case that a problem occurs when processing the first PDU of the PDU set, a problem may also occur to the configuration regarding the PDU set discarding operation.

The SDAP layer may receive information regarding dependency on the preceding PDU set, together with information regarding the PDU set configuration, from the upper layer (for example, application layer, IP layer, or non-access-stratum layer).

Method 3: an indicator (for example, ImportanceLevel or the like) may be given to indicate the level of importance of a PDU set, with regard to each PDU set. The indicator may indicate, with regard to each PDU set, whether a PDU set (for example, PDU set index = n) is dependent on the preceding PDU set (for example, PDU set index = n-1). If the ImportanceLevel value of a specific PDU set 143 or 147 is smaller than the ImportanceLevel value of the preceding PDU set 140 or 145, the PDU set 143 or 147 may be deemed to depend on the preceding PDU set 140 or 145. Therefore, a PDU set discarding operation regarding the preceding PDU set 145 may cause a PDU set discarding operation regarding the PDU set 147. On the other hand, if the ImportanceLevel value of a specific PDU set 145 is larger than the ImportanceLevel value of the preceding PDU set 143, the PDU set 145 may be deemed not to depend on the preceding PDU set 143. Therefore, a PDU set discarding operation regarding the preceding PDU set 143 may have difficulty in causing a PDU set discarding operation regarding the PDU set 145.

In order to indicate the level of importance of each PDU set to the PDCP entity, the SDAP header may include an indicator (ImportanceLevel) to indicate the level of importance of a PDU set, together with PDU set index information. The indicator may be included in the SDAP header of all PDUs that constitute a PDU set, or may be included in the SDAP header of the first PDU that constitutes a PDU set. In case that only the SDAP header of the first PDU that constitutes a PDU set includes the PDU set importance level value, the packet processing load on the SDAP/PDCP layer may be reduced. However, in case that a problem occurs when processing the first PDU of the PDU set, a problem may also occur to the configuration regarding the PDU set discarding operation.

The SDAP layer may receive information regarding the PDU set importance level value, together with information regarding the PDU set configuration, from the upper layer (for example, application layer, IP layer, or non-access-stratum layer).

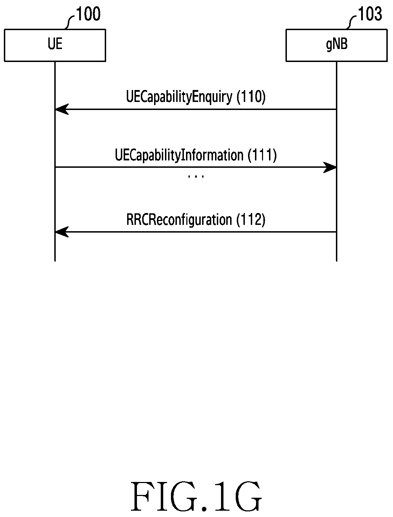

FIG. 1G illustrates a signaling procedure between a UE and a base station for configuring a PDU set discarding operation on the UE's PDCP layer according to an embodiment of the disclosure.

Referring to FIG. 1G, in step 110, the gNB 103 may deliver a UECapabilityEnquiry message to the UE 100 in a connected state to request a capability report. The gNB 103 may include a RAT type-specific UE capability enquiry in the UECapabilityEnquiry message. The RAT type-specific enquiry may include requested frequency band information. In addition, in step 110, when the gNB 103 requests the UE 100 to produce a UECapabilityInformation message, filtering information that may indicate conditions and restrictions may be included therein. Through the filtering information, the gNB 103 may indicate whether the UE 100 has to report capability related to a PDU set discarding operation. In step 111, the UE 100 may compose a UECapabilityInformation message corresponding to the UECapabilityEnquiry message in step 110, and may report a response to the UE capability enquiry to the gNB 103. The UECapabilityInformation message may include a parameter indicating whether the UE 100 supports a PDU set discarding operation. The gNB 103 may determine, based on the UECapabilityInformation message received in step 111, whether the UE 100 can perform a PDU set discarding operation. In step 112, in case that the gNB 103 has determined that the UE 100 can perform a PDU set discarding operation, the gNB 103 may instruct the UE 100 to perform a PDU set discarding operation when a specific condition is satisfied, through an RRCReconfiguration message. More specifically, in order to configure the PDU set discarding operation, the RRCReconfiguration message may include the following pieces of configuration information:

discardTimer: the gNB 103 may configure a discardTimer value for the UE 100 for a packet discarding operation on the PDCP layer in connection with data transmission that is sensitive to delay time. The discardTimer value may have a separate value configured with regard to 1) each DRB, 2) each PDU type, and 3) each PDU set type.

discardTimer operating scheme: the scheme for operating the discardTimer may be configured for a PDCP discarding operation. Configurable options include 1) a scheme in which the discardTimer is operated with regard to each PDU set, and 2) a scheme in which the discardTimer is operated with regard to each PDCP SDU, and configuration information may be included to indicate at least one of the two options. The configuration information for indicating the discardTimer operating scheme may have a separate value configured with regard to 1) each DRB, 2) each PDU type, and 3) each PDU set type.

PDU set discarding operation configuration indicator: in order to configure the PDU set discarding operation, a one-bit indicator such as "PDU_SetDiscardEnabled", "PDU_SetDiscard", "ADU_DiscardEnabled", or "ADU_Discard" may be delivered (or configured) to the UE 100 through an RRCReconfiguration message. In case that a PDU set discarding operation is configured with regard to a specific DRB, the indicator may be configured in the PDCP-Config corresponding to the DRB.

In addition, instead of configuring a PDU set discarding operation with regard to each DRB, the gNB 103 may configure the operation with regard to each UE 100. In case that the operation is configured with regard to each UE 100, the gNB 103 may deliver a one-bit indicator such as "PDU_SetDiscardEnabled", "PDU_SetDiscard", "ADU_DiscardEnabled", or "ADU_Discard" to the UE in order to configure a PDU set discarding operation. The UE 100 may perform a PDU set discarding operation with regard to DRBs which has a discardTimer configured therefor, and which received configuration information regarding a PDU set (for example, PDU set index information or the like) from the upper layer, among all DRBS configured in the UE.

DRB ID List for PDU set discarding: the gNB 103 may deliver a list of IDs of DRBs regarding which a PDU set discarding operation is to be performed, to the UE 100, and the UE 100 may perform a PDU set discarding operation in the PDCP entity corresponding to the DRBs.

PDU set type for PDU set discarding: in case that whether a PDU set discarding operation is performed differs, with regard to each PDU set, according to the PDU set type, the gNB 103 may configure the PDU set (for example, PDU_SetType value list) regarding which a PDU set discarding operation is to be performed, for the UE 100, through an RRCReconfiguration message.

ADU discarding threshold for PDU set: in case that whether a PDU set discarding operation is performed differs, with regard to each PDU set, according to the level of importance of the PDU set, the gNB 103 may configure the threshold value (for example, ADU discarding threshold) of the level of importance of a PDU set, at which a PDU set discarding operation is to be performed, for the UE 100 through an RRCReconfiguration message.

PDU type for PDU set discarding: in case that whether discardTime expiration of a PDU can cause a PDU set discarding operation of the PDU set to which the PDU belongs differs depending on each PDU's type, the gNB 103 may configure the PDU type (for example, PDU_Type value list) which may cause a PDU set discarding operation, for the UE 100, through an RRCReconfiguration message.

ADU discarding threshold for PDU: in case that whether discardTime expiration of a PDU can cause a PDU set discarding operation of the PDU set to which the PDU belongs differs depending on the level of importance of each PDU, the gNB 103 may configure the threshold value (for example, ADU discarding threshold) of the level of importance of a PDU, at which a PDU set discarding operation is to occur, for the UE 100 through an RRCReconfiguration message.

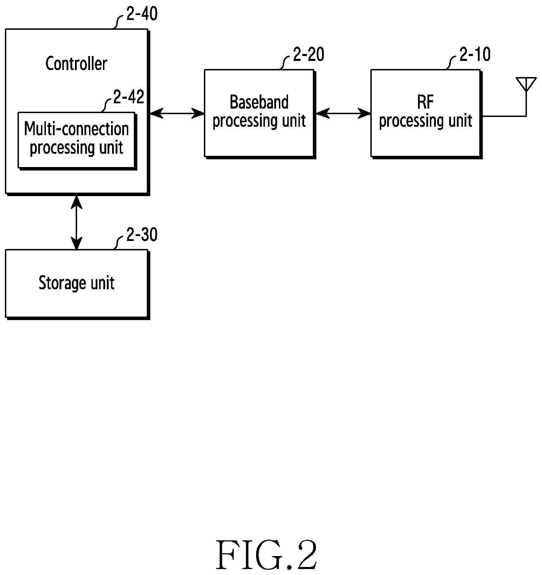

FIG. 2 illustrates a UE device according to an embodiment of the disclosure.

Referring to FIG. 2, the UE may include a radio frequency (RF) processing unit 2-10, a baseband processing unit 2-20, a storage unit 2-30, and a controller 2-40. Components of the UE are not limited to the exemplary components illustrated in FIG. 2, and may include more components than those illustrated in FIG. 2 or may include less components than those illustrated in FIG. 2.

According to an embodiment of the disclosure, the RF processing unit 2-10 may perform functions for transmitting/receiving signals through a radio channel, such as signal band conversion and amplification. For example, the RF processing unit 2-10 may up-convert a baseband signal provided from the baseband processing unit 2-20 to an RF band signal, may transmit the same through an antenna, and may down-convert an RF band signal received through the antenna to a baseband signal. For example, the RF processing unit 2-10 may include a transmission filter, a reception filter, an amplifier, a mixer, an oscillator, a digital-to-analog converter (DAC), an analog-to-digital converter (ADC), and the like, but is not limited to such examples. Although only one antenna is illustrated in FIG. 2, the UE may include multiple antennas. In addition, the RF processing unit 2-10 may include multiple RF chains. Furthermore, the RF processing unit 2-10 may perform beamforming. For the beamforming, the RF processing unit 2-10 may adjust the phase and magnitude of signals transmitted/received through multiple antennas or antenna elements, respectively. In addition, the RF processing unit 2-10 may perform MIMO, and may receive multiple layers when performing a multi-input multi-output (MIMO) operation.

The baseband processing unit 2-20 may perform functions of conversion between baseband signals and bitstrings according to the system's physical layer specifications. For example, during data transmission, the baseband processing unit 2-20 may encode and modulate a transmitted bitstring to generate complex symbols. In addition, during data reception, the baseband processing unit 2-20 may demodulate and decode a baseband signal provided from the RF processing unit 2-10 to restore a received bitstring. For example, when following the OFDM scheme, during data transmission, the baseband processing unit 2-20 may encode and modulate a transmitted bitstring to generate complex symbols, may map the complex symbols to subcarriers, and may configure OFDM symbols through inverse fast Fourier transform (IFFT) operation and cyclic prefix (CP) insertion. In addition, during data reception, the baseband processing unit 2-20 may split a baseband signal provided from the RF processing unit 2-10 at the OFDM symbol level, may restore signals mapped to subcarriers through a fast Fourier transform (FFT) operation, and may restore a received bitstring through demodulation and decoding.

According to an embodiment of the disclosure, the baseband processing unit 2-20 and the RF processing unit 2-10 may transmit and receive signals as described above. Therefore, the baseband processing unit 2-20 and the RF processing unit 2-10 may be referred to as a transmitter, a receiver, a transceiver, or a communication unit. Furthermore, at least one of the baseband processing unit 2-20 and the RF processing unit 2-10 may include multiple communication modules to support multiple different radio access technologies. In addition, at least one of the baseband processing unit 2-20 and the RF processing unit 2-10 may include different communication modules to process signals in different frequency bands. For example, the different radio access technologies may include wireless LANs (for example, IEEE 802.11), cellular networks (for example, LTE), and the like. In addition, the different frequency bands may include a super high frequency (SHF) (for example, 2.NRHz, NRhz) bands and millimeter wave (for example, 60GHz) bands. The UE may transmit/receive a signal with the gNB by using the baseband processing unit 2-20 and the RF processing unit 2-10, and the signal may include control information and data.

According to an embodiment of the disclosure, the storage unit 2-30 may store data such as basic programs for operation of the UE, application programs, and configuration information. For example, the storage unit 2-30 may store data information such as basic programs for operation of the UE, application programs, and configuration information. In addition, the storage unit 2-30 may provide the stored data at the request of the controller 2-40.

The storage unit 2-30 may be configured by a storage media such as a ROM, a RAM, a hard disk, a CD-ROM, and a DVD, or a combination of storage media. In addition, the storage unit 2-30 may be configured by multiple memories.

The controller 2-40 may control overall operations of the UE. For example, the controller 2-40 may transmit/receive signals through the baseband processing unit 2-20 and the RF processing unit 2-10. In addition, the controller 2-40 may record and read data in the storage unit 2-30. To this end, the controller 2-40 may include at least one processor. For example, the controller 2-40 may include a communication processor (CP) configured to perform control for communication, and an application processor (AP) configured to control upper layers such as application programs. In addition, according to an embodiment of the disclosure, the controller 2-40 may include a multi-connection processing unit 2-42 configured to process processes operating in a multi-connection mode. In addition, at least one component in the UE may be implemented as one chip.

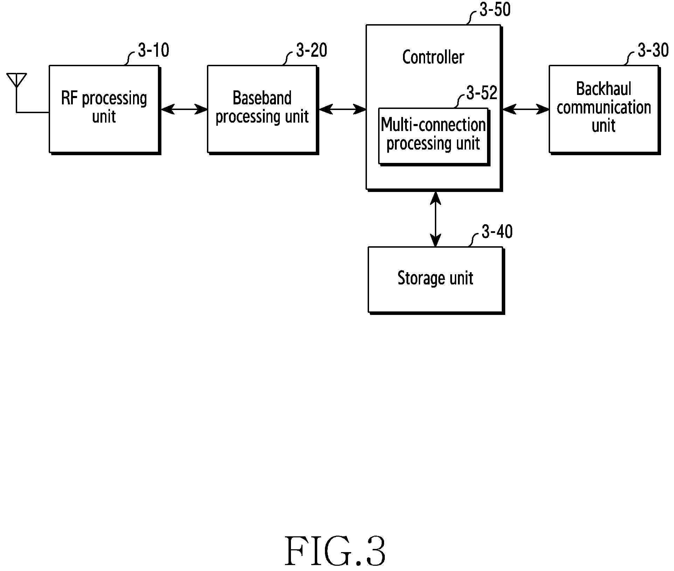

FIG. 3 illustrates a gNB device according to an embodiment of the disclosure.

Referring to FIG. 3, the gNB may include an RF processing unit 3-10, a baseband processing unit 3-20, a backhaul communication unit 3-30, a storage unit 3-40, and a controller 3-50. Components of the gNB are not limited to the exemplary components illustrated in FIG. 3, and the gNB may include more components than those illustrated in FIG. 3 or may include less components than those illustrated in FIG. 3.

According to an embodiment of the disclosure, the RF processing unit 3-10 may perform functions for transmitting/receiving signals through a radio channel, such as signal band conversion and amplification. That is, the RF processing unit 3-10 may up-convert a baseband signal provided from the baseband processing unit 3-20 to an RF band signal, may transmit the same through an antenna, and may down-convert an RF band signal received through the antenna to a baseband signal. For example, the RF processing unit 3-10 may include a transmission filter, a reception filter, an amplifier, a mixer, an oscillator, a DAC, and an ADC. Although only one antenna is illustrated in FIG. 3, the RF processing unit 3-10 may include multiple antennas. In addition, the RF processing unit 3-10 may include multiple RF chains. Furthermore, the RF processing unit 3-10 may perform beamforming. For the beamforming, the RF processing unit 3-10 may adjust the phase and magnitude of signals transmitted/received through multiple antennas or antenna elements, respectively. The RF processing unit 3-10 may transmit one or more layers to perform a downward MIMO operation.

According to an embodiment of the disclosure, the baseband processing unit 3-20 may perform functions of conversion between baseband signals and bitstrings according to the physical layer specifications. For example, during data transmission, the baseband processing unit 3-20 may encode and modulate a transmitted bitstring to generate complex symbols. In addition, during data reception, the baseband processing unit 3-20 may demodulate and decode a baseband signal provided from the RF processing unit 3-10 to restore a received bitstring. For example, when following the OFDM scheme, during data transmission, the baseband processing unit 3-20 may encode and modulate a transmitted bitstring to generate complex symbols, may map the complex symbols to subcarriers, and may configure OFDM symbols through IFFT operation and CP insertion. In addition, during data reception, the baseband processing unit 3-20 may split a baseband signal provided from the RF processing unit 3-10 at the OFDM symbol level, may restore signals mapped to subcarriers through FFT operation, and may restore a received bitstring through demodulation and decoding. The baseband processing unit 3-20 and the RF processing unit 3-10 may transmit and receive signals as described above. Therefore, the baseband processing unit 3-20 and the RF processing unit 3-10 may be referred to as a transmitter, a receiver, a transceiver, a communication unit, or a communication unit. The gNB may transmit/receive a signal with the UE by using the baseband processing unit 3-20 and the RF processing unit 3-10, and the signal may include control information and data.

According to an embodiment of the disclosure, the backhaul communication unit 3-30 may provide an interface for communicating with other nodes in the network. For example, the backhaul communication unit 3-30 may convert bitstrings transmitted from the main gNB to other nodes (for example, auxiliary gNB, core network) to physical signals, and may convert physical signals received from the other nodes to bitstrings.

According to an embodiment of the disclosure, the storage unit 3-40 may store data such as basic programs for operation of the main gNB, application programs, and configuration information. For example, the storage unit 3-40 may store information regarding a bearer allocated to a connected UE, a measurement result reported from the connected UE, and the like. In addition, the storage unit 3-40 may store information serving as a reference to determine whether to provide multi-connection to a UE or to suspend the same. In addition, the storage unit 3-40 may provide the stored data at the request of the controller 3-50. The storage unit 3-40 may be configured by a storage media such as a ROM, a RAM, a hard disk, a CD-ROM, and a DVD, or a combination of storage media. In addition, the storage unit 3-40 may be configured by multiple memories.

According to an embodiment of the disclosure, the controller 3-50 may control overall operations of the main gNB. For example, the controller 3-50 may transmit/receive signals through the baseband processing unit 3-20 and the RF processing unit 3-10 or through the backhaul communication unit 3-30. In addition, the controller 3-50 may record and read data in the storage unit 3-40. To this end, the controller 3-50 may include at least one processor. In addition, according to an embodiment of the disclosure, the controller 3-50 may include a multi-connection processing unit 3-52 configured to process processes operating in a multi-connection mode.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the disclosure, the term "computer program product" or "computer readable medium" is used to generally refer to a medium such as a memory, a hard disk installed in a hard disk drive, or a signal. The "computer program product" or "computer readable medium" is an element that is provided to a method for reporting UE capability in a wireless communication system according to the disclosure.

The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium. As an example, the "non-transitory storage medium" may include a buffer in which data is temporarily stored

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. In addition, the embodiments of the disclosure may be applied to other communication systems and other variants based on the technical idea of the embodiments may also be implemented. For example, the embodiments may be applied to LTE, 5G, NR, or 6G systems. Therefore, the scope of the disclosure should not be defined as being limited to the embodiments set forth herein, but should be defined by the appended claims and equivalents thereof.

## Claims

1. A method performed by a terminal in a wireless communication system, the method comprising:
receiving a terminal capability enquiry message from a base station;
transmitting terminal capability information comprising information related to discarding of a protocol data unit (PDU) set to the base station, in response to the terminal capability enquiry message; and
receiving configuration information regarding discarding of the PDU set from the base station in case that the terminal supports discarding of the PDU set,
wherein, in case that at least one PDU constituting the PDU set needs to be discarded, the PDU set is discarded based on the configuration information.

2. The method of claim 1, wherein the configuration information comprises at least one of a timer for determining whether or not to discard the at least one PDU, a discarding indicator, a data radio bearer (DRB) identifier, the type of the PDU set, or a threshold value regarding the level of importance of the PDU set.

3. The method of claim 2, wherein the level of importance is identified with regard to each PDU set, and whether or not the PDU set is to be discarded is determined based on the level of importance and the threshold value.

4. The method of claim 2, wherein the threshold value is configured with regard to each DRB or terminal, and the configuration unit and size of the threshold value are determined according to the type of traffic.

5. A method performed by a base station in a wireless communication system, the method comprising:
transmitting a terminal capability enquiry message to a terminal;
receiving terminal capability information comprising information related to discarding of a protocol data unit (PDU) set from the terminal, in response to the terminal capability enquiry message; and
transmitting configuration information regarding discarding of the PDU set to the terminal in case that the terminal supports discarding of the PDU set,
wherein, in case that at least one PDU constituting the PDU set needs to be discarded, the PDU set is discarded based on the configuration information.

6. The method of claim 5, wherein the configuration information comprises at least one of a timer for determining whether or not to discard the at least one PDU, a discarding indicator, a data radio bearer (DRB) identifier, the type of the PDU set, or a threshold value regarding the level of importance of the PDU set.

7. The method of claim 6, wherein the level of importance is identified with regard to each PDU set, and whether or not the PDU set is to be discarded is determined based on the level of importance and the threshold value.

8. The method of claim 6, wherein the threshold value is configured with regard to each DRB or terminal, and the configuration unit and size of the threshold value are determined according to the type of traffic.

9. A terminal in a wireless communication system, the terminal comprising:
a transceiver; and
at least one processor coupled to the transceiver and configured to:
receive a terminal capability enquiry message from a base station;
transmit terminal capability information comprising information related to discarding of a protocol data unit (PDU) set to the base station, in response to the terminal capability enquiry message; and
receive configuration information regarding discarding of the PDU set from the base station in case that the terminal supports discarding of the PDU set, and
wherein, in case that at least one PDU constituting the PDU set needs to be discarded, the PDU set is discarded based on the configuration information.

10. The terminal of claim 9, wherein the configuration information comprises at least one of a timer for determining whether or not to discard the at least one PDU, a discarding indicator, a data radio bearer (DRB) identifier, the type of the PDU set, or a threshold value regarding the level of importance of the PDU set.

11. The terminal of claim 10, wherein the level of importance is identified with regard to each PDU set, and whether or not the PDU set is to be discarded is determined based on the level of importance and the threshold value.

12. The terminal of claim 10, wherein the threshold value is configured with regard to each DRB or terminal, and the configuration unit and size of the threshold value are determined according to the type of traffic.

13. A base station in a wireless communication system, the base station comprising:
a transceiver; and
at least one processor coupled to the transceiver and configured to:
transmit a terminal capability enquiry message to a terminal;
receive terminal capability information comprising information related to discarding of a protocol data unit (PDU) set from the terminal, in response to the terminal capability enquiry message; and
transmit configuration information regarding discarding of the PDU set to the terminal in case that the terminal supports discarding of the PDU set,
wherein, in case that at least one PDU constituting the PDU set needs to be discarded, the PDU set is discarded based on the configuration information.

14. The base station of claim 13, wherein the configuration information comprises at least one of a timer for determining whether or not to discard the at least one PDU, a discarding indicator, a data radio bearer (DRB) identifier, the type of the PDU set, or a threshold value regarding the level of importance of the PDU set.

15. The base station of claim 14, wherein the level of importance is identified with regard to each PDU set, and whether or not the PDU set is to be discarded is determined based on the level of importance and the threshold value.
